# EUROPÄISCHE PATENTSCHRIFT

(11) **EP 1 994 973 B1**
(45) Veröffentlichungstag und Bekanntmachung des Hinweises auf die Patenterteilung: **18.11.2009**
(21) Anmeldenummer: 08103567.7
(22) Anmeldetag: 16.04.2008
(51) Int. Cl.: B01D 27/00, B67D 1/08, C02F 1/28

(54) **Wasserfiltergerät**
Water filter device
Dispositif de filtration d'eau

(30) Priorität: 24.05.2007 DE 202007007413 U; 07.08.2007 DE 202007010955 U
(43) Veröffentlichungstag der Anmeldung: 26.11.2008
(73) Patentinhaber: WIK Far East Ltd., Hong Kong (CN)
(72) Erfinder: Steckhan Markus, 45481, Mülheim (DE)
(74) Vertreter: Haverkamp, Jens

(56) Entgegenhaltungen:
- WO-A-01/50875
- DE-A1- 4 200 253
- DE-U1- 20 308 729
- US-A1- 2004 040 899

## Beschreibung

Die Erfindung betrifft ein Wasserfiltergerät, umfassend einen Rohwasserbehälter zur Aufnahme von zu filterndem Wasser, einen Auslauf, einen Filtereinsatz, angeordnet damit das zu filternde Wasser auf seinem Weg zum Auslauf den Filtereinsatz durchströmt, und eine Stellfläche zum Anordnen eines das gefilterte Wasser aufnehmenden Gefäßes.

Es ist bekannt, dass zum Verbessern der Qualität von Wasser, insbesondere von Leitungswasser Filtervorrichtungen eingesetzt werden, durch die das Rohwasser vor seinem Gebrauch hindurchgeführt wird. Derartige Filtervorrichtungen sind zum Beispiel aus der DE 203 08 729 U1 oder der US 2004/0040899 bekannt. Im Zusammenhang mit Wasserkochern sind Wasserkocheinrichtungen entwickelt worden, die zwei Behälter aufweisen, welche beiden Behälter durch den eigentlichen Filterkörper getrennt sind. Der eine Behälter dient zur Aufnahme des Rohwassers; der andere Behälter dient zur Aufnahme des gefilterten Wassers. Derartige Wasserkocheinrichtungen verfügen zudem über eine Heizeinrichtung zum Erwärmen des gefilterten Wassers. Eine solche Wasserkocheinrichtung ist beispielsweise aus DE 198 61 175 B4 oder GB 2 294 631 A bekannt. Bei diesen vorbekannten Wasserkocheinrichtungen ist die Handhabung aufgrund der Größe des Geräts mitunter umständlich.

Neben diesen als Kompletteinheiten anzusprechenden Wasserkocheinrichtungen sind auch solche bekannt geworden, bei denen der Wasserkocher von der Filtervorrichtung trennbar ist. Beschrieben ist eine solche Wasserkocheinrichtung in EP 1 028 090 A1. Diese Wasserkocheinrichtung verfügt über eine Filtervorrichtung mit einem Rohwasserbehälter und einem das gefilterte Wasser aufnehmenden Filtratbehälter. Der Rohwasserbehälter ist oberhalb des Filtratbehälters angeordnet. Der Filtereinrichtung ist eine Pumpe sowie ein Zapfhahn als Auslauf zugeordnet. Die Pumpe dient zum Fördern des gefilterten Wassers in den Auslauf, der oberhalb des Wasserkochers angeordnet ist. Teil der Wasserkocheinrichtung ist des Weiteren eine Energieversorgungseinheit, über die dem von der Energieversorgungseinheit abnehmbaren Wasserkocher der notwendige Strom zum Betreiben der dem Wasserkocher zugeordneten Heizeinrichtung zugeführt wird. Der Deckel des Wasserkochers weist eine Einlassöffnung auf, die sich unterhalb des Auslaufes des Zapfhahnes befindet, wenn der Wasserkocher auf die Energieversorgungseinheit aufgestellt ist. Zum Befüllen des Wasserkochers mit gefiltertem Wasser wird die Pumpe betätigt.

Bei diesem vorbekannten Wasserfiltergerät sind die beteiligten Komponenten hinsichtlich ihrer Größe und Funktionalität aufeinander abgestimmt. Daher eignet sich dieses Wasserfiltergerät letztendlich nur zum Befüllen des dem Gerät zugehörigen Gefäßes.

Ausgehend von diesem diskutierten Stand der Technik liegt der Erfindung daher die Aufgabe zugrunde, ein eingangs genanntes, gattungsgemäßes Wasserfiltergerät dergestalt weiterzubilden, dass dieses nicht nur einen einfachen Aufbau und stromlos betrieben werden kann, sondern dass sich mit diesem ebenfalls hinsichtlich ihrer Größe unterschiedliche Gefäße befüllen lassen.

Diese Aufgabe wird erfindungsgemäß durch ein eingangs genanntes, gattungsgemäßes Wasserfiltergerät gelöst, bei dem
- der Rohwasserbehälter auf einem Niveau oberhalb des wasseraufnehmenden Gefäßes angeordnet ist,
- die Stellfläche die Oberseite eines Standfußes ist,
- der Rohwasserbehälter von einem am Standfuß befestigten Stativ an dieses höhenverstellbar angeschlossen ist und
- der Stellfläche mehrere von dieser nach oben abragende, zum Einfassen eines Bodenteils des Gefäßes angeordnete Fixierelemente zugeordnet sind, von denen zur Adaption an den Durchmesser des Bodenteils eines Gefäßes zumindest eines bezüglich seines Abstandes zu dem oder den anderen Fixierelementen einrichtbar ist.

Bei diesem Wasserfiltergerät befindet sich der Rohwasserbehälter auf einem Niveau oberhalb des wasseraufnehmenden Gefäßes. Der Vorgang des Filterns des Rohwassers und das Auslaufenlassen desselben in das zur Aufnahme des gefilterten Wassers vorgesehene Gefäß erfolgt bei diesem Wasserfiltergerät schwerkraftbedingt. Ein Einsatz von elektrischen Komponenten zum Durchführen des Filtervorganges ist daher grundsätzlich nicht erforderlich. Der Rohwasserbehälter ist höhenverstellbar an einem Stativ gehalten. Das Stativ selbst ist an einen Standfuß angeschlossen, dessen Oberseite die Stellfläche für das das gefilterte Wasser aufnehmende Gefäß darstellt. Die Höhenverstellbarkeit des Rohwasserbehälters bzw. seines Auslaufes gestattet ein Anpassen der Höhe des Auslaufes in Abhängigkeit von der Höhe der zum Befüllen des Gefäßes vorgesehenen Einlauföffnung. Hierbei kann es sich um eine oberseitige Öffnung in dem Gefäß selbst handeln, einer Öffnung in einem Deckel des Gefäßes oder um seine Schnaupe. Zum Fixieren bzw. Halten des das gefilterte Wasser aufnehmende Gefäßes verfügt die Stellfläche über mehrere von dieser nach oben abragende Fixierelemente. Diese dienen zum Einfassen eines Bodenteils des Gefäßes. Bei dem Bodenteil des Gefäßes kann es sich um den bodenseitigen Abschluss des Gefäßes handeln oder auch um eine dem Gefäß zugeordnete Stromversorgungseinheit, auf der das Gefäß lösbar aufstellbar ist. Im letzteren Falle handelt es sich bei dem das gefilterte Wasser aufnehmenden Gefäß um einen Wasserkocher. Die Fixierelemente, die nach Art von Backen ausgestaltet sein können, dienen zum definierten Aufstellen des mit dem gefilterten Wasser zu befüllenden Gefäßes auf der Stellfläche, wodurch der Rohwasserbehälter bzw. sein Auslauf sich in einer definierten Anordnung auf der Stellfläche und somit zu dem Auslauf der Filtereinheit befindet.

Zum Anpassen des von den Fixierelementen eingefassten Stellflächenbereiches an den Durchmesser des Bodens oder Bodenteils eines mit dem gefilterten Wasser zu befüllenden Gefäßes ist zumindest eines der Fixierelemente bezüglich seines Abstandes zu dem oder den anderen Fixierelementen einrichtbar. Auf diese Weise kann unabhängig von dem Durchmesser des das gefilterte Wasser aufnehmenden Gefäßes eine definierte Anordnung dieses Gefäßes auf der Stellfläche erfolgen. Gemäß einem ersten Ausführungsbeispiel ist wenigstens ein Fixierelement feststehend, gegenüber dem das oder die anderen Fixierelemente bezüglich ihres Abstandes zu dem zumindest ein feststehendem Fixierelement einrichtbar sind. Ein solches feststehendes Fixierelement oder vorzugsweise zwei mit geringem Abstand zueinander angeordnete feststehende Fixierelemente dienen vorzugsweise als Stellmarkierung zum orientierten Anordnen des das gefilterte Wasser aufnehmenden Gefäßes auf der Stellfläche. Eine solche Ausgestaltung ist dann zweckmäßig, wenn das Gefäß über seine Schnaupe befüllt werden soll. Die Stellmarkierung dient dem Zweck, diejenige Richtung anzuzeigen, in der die Schnaupe des Gefäßes bezogen zum Zentrum der Stellfläche auszurichten ist, damit das aus dem Auslauf austretende Wasser in die nach oben hin offene Schnaupe einlaufen kann. Eine derartige Stellmarkierung ist auch sinnvoll, um im Durchmesser unterschiedlich große Gefäße definiert anzuordnen, wenn diese durch eine oberseitige Öffnung befüllt werden sollen.

Gemäß einem weiteren Ausführungsbeispiel ist vorgesehen, dass sämtliche, vorzugsweise als Backen ausgebildete Fixierelemente gegenüber dem Zentrum der Stellfläche einrichtbar sind. Bei einer solchen Ausgestaltung befindet sich jedes auf der Stellfläche abgestellte Gefäß unabhängig von der Größe seines Durchmessers zentrisch bezüglich der Stellfläche orientiert. Bei einer solchen Ausgestaltung lässt sich jedes Gefäß durch seine oberseitige Öffnung von ein und derselben Stelle des Auslaufes aus befüllen, unabhängig davon, welchen Durchmesser das Gefäß aufweist. Zum gleichmäßigen Bewegen dieser radial bezüglich des Zentrums der Stellfläche bewegbaren Fixierelemente kann eine Steuerscheibe vorgesehen sein, mit der die einzelnen Fixierelemente über eine Kulissensteuerung in Eingriff stehen. Die Steuerscheibe ist um eine Drehachse verstellbar, die durch das Zentrum der Stellfläche geführt ist. Zum Verstellen der Steuerscheibe dient vorzugsweise ein radial von dieser nach außen abragender Betätigungshebel, der außenseitig ein geriffeltes Bedienelement tragen kann. Über ein solches Betätigungselement kann die Steuerscheibe in die eine oder auch in die andere Richtung bewegt werden, um die Fixierelemente vom Zentrum der Stellfläche zu entfernen oder zu dieser hinzuführen. Die Länge der Kulissenführung begrenzt gleichzeitig den Bewegungsbetrag der Fixierelemente.

Die Höheneinrichtbarkeit des Rohwasserbehälters gegenüber der Stellfläche erfolgt gemäß einem Ausführungsbeispiel durch ein auf das Stativ einwirkendes Stellrad. Dieses kann Teil des Rohwasserbehälters sein. Gleichfalls ist es möglich, das Stellrad als eigenständige Einheit auszubilden, das, in einem Gehäuse aufgenommen, gegenüber dem Stativ in dessen Längsrichtung verstellbar ist und auf welchem Gehäuse der Rohwasserbehälter sich abstützt. Mit der Höhenverstellung des Stellrades wird ebenfalls der Rohwasserbehälter angehoben oder abgesenkt. Letztere Ausgestaltung ist insbesondere dann zweckmäßig, wenn der Rohwasserbehälter gegenüber dem Stativ um die Längsachse des Stativs verschwenkt werden soll. Eine solche Verschwenkbarkeit des Rohwasserbehälters kann vorgesehen sein, wenn die Fixierelementeinrichtung zentrisch zur Stellfläche erfolgt und über ihre Schnaupe befüllt werden sollen. Durch die Verschwenkbarkeit des Rohwasserbehälters und seines Auslaufes erfolgt sodann eine Anpassung an den unterschiedlichen Abstand der Schnaupenöffnung vom Zentrum der Stellfläche bei im Durchmesser unterschiedlich großen Gefäßen. In einer Weiterbildung dieser Konzeption ist vorgesehen, dass die Schwenkbewegung des Rohwasserbehälters gegenüber dem Stativ und somit auch gegenüber der Stellfläche durch eine Rückstellfeder beeinflusst ist. Durch diese wird der Rohwasserbehälter mit seinem Auslauf an einen Anschlag gedrückt, in welcher Stellung der Auslauf des Rohwasserbehälters im Bezug auf den möglichen Bewegungsbetrag des Rohwasserbehälters seinen kürzesten Abstand zum Zentrum der Stellfläche aufweist. Wird auf die Stellfläche ein mit einem größeren Gefäßdurchmesser aufweisendes Gefäß aufgesetzt, wird der Rohwasserbehälter mit der Schnaupe des Gefäßes gegen die Kraft des Federelementes von dem Anschlag weg bewegt. Somit erfolgt bei diesem Ausführungsbeispiel eine selbsttätige Anpassung an Gefäße mit unterschiedlichem Durchmesser, wenn diese über ihrer Schnaupe befüllt werden sollen.

Das auf das Stativ wirkende Stellrad zur Höhenverstellung des Rohwasserbehälters gegenüber der Stellfläche verfügt vorzugsweise über eine Zahnung, die in eine komplementäre Zahnung des Stativs eingreift. Die Zahnung des Stellrades dient sodann zum einen als griffige Stellfläche zum Drehen des Stellrades und zum anderen zum Bewegen desselben in der nach Art einer Zahnstange ausgebildeten Zahnung des Stativs. Das Stellrad verfügt zweckmäßigerweise über eine Arretiereinrichtung zum Arretieren desselben. Als Arretiereinrichtung kann beispielsweise ein federbelasteter Stößel dienen, der gegen eine Seitenfläche des Stellrades wirkt oder in eine Ausnehmung des Stellrades eingreift. Erst wenn der Stößel gegen die Federkraft von dem Stellrad weg bewegt worden ist, kann das Stellrad zur Höhenverstellung des Rohwasserbehälters gedreht werden.

Gemäß einer bevorzugten Ausgestaltung ist das Wasserfiltergerät ausgebildet, um ein auf der Stellfläche ausgebildetes Gefäß über seine Schnaupe zu befüllen. Zweckmäßigerweise verfügt dieses Gefäß sodann über eine zu diesem Zweck ausreichend groß ausgebildete Schnaupe, wie dieses typisch für moderne Wasserkocher ist. Bei einer solchen Ausgestaltung bietet es sich an, im Auslauf ein selbstschließendes Ventil anzuordnen, das gegen die Kraft eines Federelementes mit der Schnaupe des Gefäßes zu öffnen ist. Somit kann bei diesem Wasserfiltergerät aus dem Auslauf nur dann Wasser auslaufen, wenn auf der Stellfläche ein Gefäß angeordnet ist, welches mit seiner Schnaupe gegen das Ventil wirkt. Bei nicht bestimmungsgemäß eingerichtetem Wasserfiltergerät kann eine Befüllung nicht erfolgen. Hierdurch ist ein ungewünschtes Auslaufen oder auch ein Vorbeilaufen von gefiltertem Wasser an dem Gefäß vermieden. Dieses ist dann sinnvoll, wenn es sich bei dem das gefilterte Wasser aufnehmenden Gefäß um einen elektrischen Wasserkocher handelt, vor allem um einen solchen mit einer von dem eigentlichen Wasserkocher lösbaren Stromversorgungseinheit. Daher besteht bei dieser Ausgestaltung keine Gefahr, dass nicht bestimmungsgemäß auslaufendes Wasser an elektrische Elemente der Stromversorgungseinheit gelangen kann.

Nachfolgend ist die Erfindung anhand eines Ausführungsbeispiels unter Bezugnahme auf die beigefügten Figuren beschrieben. Es zeigen:
- **Fig. 1:**: Eine perspektivische Ansicht eines Wasserfiltergerätes, mit einem Standfuß, einem Stativ und einer von diesem gehaltenen Filtereinheit,
- **Fig. 2:**: der Fuß des Wasserfiltergerätes der Figur 1 in einer perspektivischen Schrägansicht von oben nach Art einer Explosions-darstellung,
- **Fig. 3:**: der in Figur 2 gezeigte Fuß in einer perspektivischen Ansicht von unten,
- **Fig. 4a, 4b:**: schematisiert Halb-Querschnittsdarstellungen durch einen Ausschnitt einer die Filtereinheit tragenden Stelleinrichtung umfassend eine Arretiereinrichtung in einer arretierenden Stellung derselben (Figur 4a) sowie in ihrer nicht arretierenden Stellung (Figur 4b),
- **Fig. 5:**: das Wasserfiltergerät der Figur 1 mit einem auf der Stellfläche des Fußes aufgesetzten Wasserkocher in einer Position zum Anpassen des Wasserfiltergerätes an die Höhe des Wasserkochers und
- **Fig. 6:**: der Wasserkocher der Figur 4 in seiner Stellung zum Befüllen desselben mit gefiltertem Wasser.

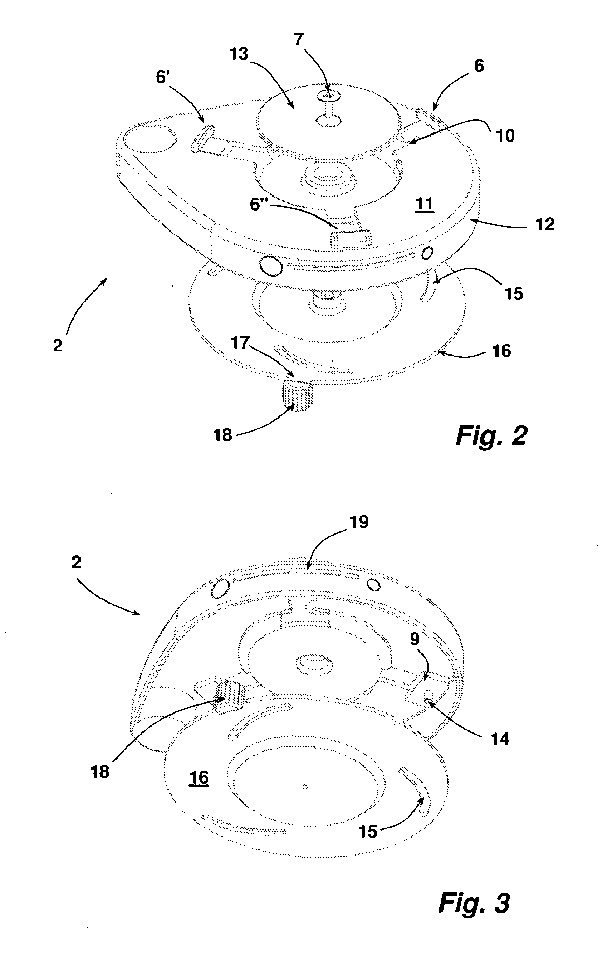

Ein Wasserfiltergerät 1 umfasst einen Standfuß 2, ein an dem Standfuß 2 befestigtes Stativ 3 und eine Filtereinheit 4. Die Filtereinheit 4 dient zum Filtern von Rohwasser, so dass aus dieser gefiltertes Wasser bei Bedarf entnommen werden kann. Das Wasserfiltergerät 1 ist an die Größe unterschiedlicher Gefäße zum Auffangen des gefilterten Wassers ausgelegt. Zu diesem Zweck verfügt das Wasserfiltergerät 1 über einen Standfuß 2, dessen Oberseite als Stellfläche 5 zum Aufsetzen eines mit dem gefilterten Wasser zu befüllenden Gefäßes ausgebildet ist. Zum definierten Aufsetzen eines solchen Gefäßes auf die Stellfläche 5 verfügt der Standfuß 2 über drei als Fixierelemente ausgebildete Backen 6, 6', 6". Die Backen 6, 6', 6" ragen von der Stellfläche 5 nach oben ab und dienen zum Einfassen des Bodens oder eines Bodenteils des mit dem gefilterten Wasser zu befüllenden Gefäßes. Die Backen 6, 6', 6" sind in radialer Richtung bezogen auf das Zentrum 7 der Stellfläche 5 einrichtbar, wie dieses durch den der Backe 6 zugeordneten Doppelpfeil kenntlich gemacht ist. Im Folgenden ist die Backe 6 beschrieben. Die Backen 6' und 6" sind identisch aufgebaut. Die Backe 6 verfügt über einen oberhalb der Stellfläche 5 befindlichen Einfasskörper 8, an dem ein Führungskörper 9 angeformt ist. Der Führungskörper 9 ist in einer radial verlaufenden Kulisse 10 in radialer Richtung, wie durch den vorgenannten Doppelpfeil kenntlich gemacht, beweglich geführt. Der Führungskörper 9 hintergreift die die Stellfläche 5 ausbildende Platte 11, so dass die Backe 6 durch den Einfasskörper 8 und den die Platte 11 hintergreifenden Abschnitt an dieser gehalten ist. Die Platte selbst ist Teil des insgesamt mit dem Bezugszeichen 12 gekennzeichneten Gehäuses 12 des Standfußes 2. Bei der Platte 11 handelt es sich um einen Ringkörper, dessen Zentrum durch eine Verschlussplatte 13 verschlossen ist. Die Verschlussplatte 13 ist bei dem dargestellten Ausführungsbeispiel von dem Standfuß 2 lösbar und dient maßgeblich dem Zweck, bei abgenommener Verschlussplatte 13 die Backen 6, 6', 6" in die Kulissen 10 einzuschieben, wie dieses aus der Explosionsdarstellung des Standfußes 2 der Figur 2 erkennbar ist. Die in dieser Figur von dem Gehäuse 12 abgenommene Verschlussplatte 13 zeigt die zum Zentrum weisende Öffnung der Kulissen 10. An dem Führungskörper 9 der Backe 6 ist nach unten abragend ein Führungszapfen 14 (vgl. Figur 3) angeformt, der in eine Kulisse 15 einer Steuerscheibe 16 eingreift. Die Kulisse 15 ist nach Art eines Spiralabschnittes ausgeführt, so dass das eine Ende der Kulisse 15 einen geringeren Abstand zum Zentrum 7 der Stellfläche 5 aufweist als das andere Ende. An die Steuerscheibe 16 ist ein Betätigungshebel 17 in radialer Richtung nach außen abragend angeformt. Der Betätigungshebel 17 trägt an seinem freien Ende ein Griffstück 18. Das Griffstück 18 ist außen gerändelt.

Das Zusammenwirken zwischen den Führungszapfen 14 der Führungskörper 9 der Backen 6, 6', 6" ist aus der Einsicht in das Gehäuse 12 des Standfußes 2 der Figur 3 erkennbar. Der Betätigungshebel 17 durchgreift einen in die Mantelfläche des Gehäuses 12 eingebrachten Schlitz 19. Das Griffstück 18 befindet sich auf der Außenseite des Schlitzes 19. Somit kann die Steuerscheibe 16 durch Verschieben des Griffstückes 18 innerhalb des Schlitzes 19 in die eine oder die andere Richtung gedreht werden, wobei in Abhängigkeit von der Bewegung der Steuerscheibe 16 die Backen 6, 6', 6" bezüglich ihres Abstandes zueinander und somit bezüglich ihres Abstandes zum Zentrum 7 der Stellfläche 5 einrichtbar sind. Die Kulissen 15 sind bezüglich sämtlicher Backen 6, 6', 6" identisch aufgebaut, so dass jede Backe 6, 6', 6" bei einer Verstellung der Steuerscheibe 16 in demselben Maße zum Zentrum 7 hin oder von diesem weg bewegt wird.

Auf dem Stativ 3 sitzt die Filtereinheit 4. Die Filtereinheit 4 verfügt über einen Kanal zur Aufnahme des oberen Endes des Stativs 3. Die Filtereinheit 4 stützt sich mit ihrer Unterseite auf der Oberseite der Stelleinrichtung 20 ab. Somit wird die Filtereinheit 4 bei einem Verstellen der Stelleinrichtung 20 gegenüber dem Stativ 3 bezüglich ihrer Höhe zu dem Standfuß 2 eingerichtet.

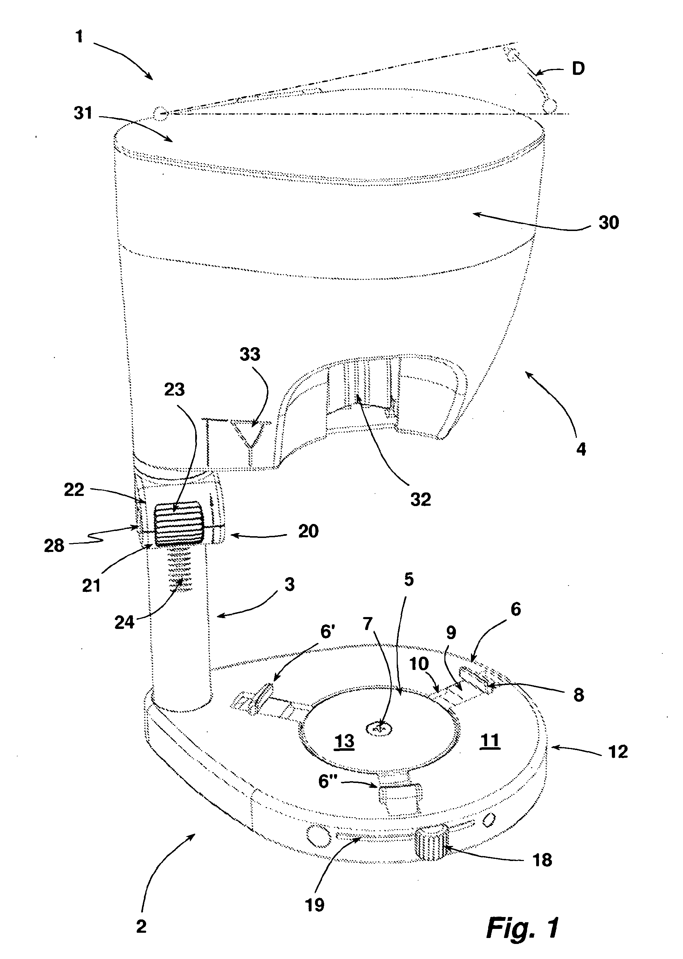

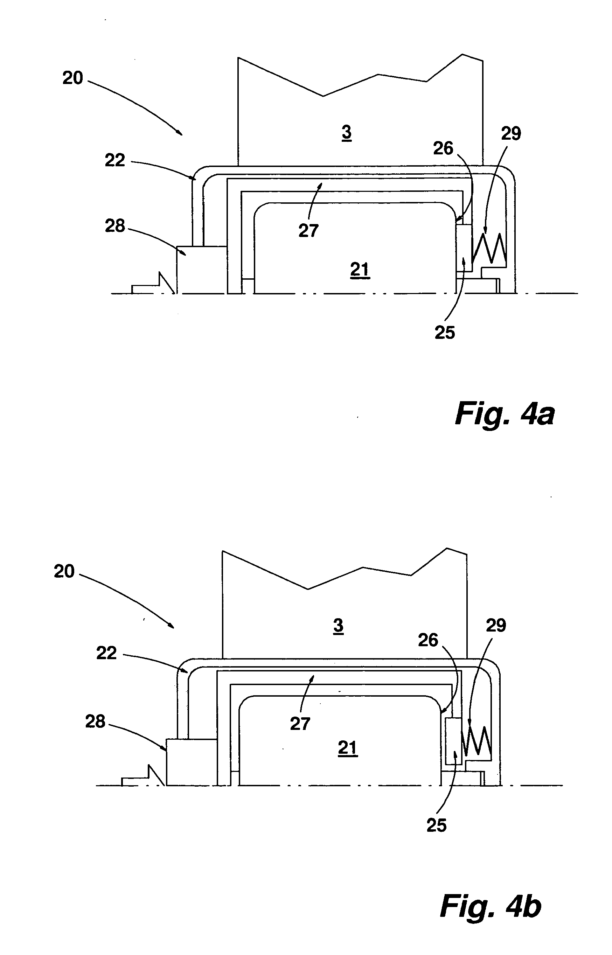

Die Stelleinrichtung 20 umfasst ein in einem Gehäuse 22 gelagertes Stellrad 21. Das Stellrad 21 trägt außenseitig eine Zahnung 23, durch die zum einen eine gewisse Griffigkeit zum Drehen des Stellrades 22 erzeugt wird und die zum anderen in eine in die Außenseite des Stativs 3 eingebrachte komplementäre Zahnung 24 eingreift. Durch Drehen des Stellrades 21 ist dieses sodann in der nach Art einer Zahnstange dienenden Zahnung 24 in längsaxialer Richtung des Stativs 3 bewegbar. Der Aufbau der Stelleinrichtung 20 ist aus den Querschnittsdarstellungen der Figuren 4a, 4b erkennbar. Der Stelleinrichtung 20 ist eine Arretiereinrichtung zugeordnet, mit der das Stellrad 21 arretiert werden kann. Die Arretiereinrichtung des dargestellten Ausführungsbeispiels führt zu einer selbsttätigen Arretierung des Stellrades 21, wenn dieses nicht bewegt wird. Die Arretiereinrichtung umfasst eine Arretierbacke 25, die an ihrer zu der Seitenfläche 26 des Stellrades 21 weisenden Seite eine Rillung trägt. Die Seitenfläche 26 des Stellrades 21 verfügt über eine entsprechend komplementäre Rillung mit dem Zweck, damit die Arretierbacke 25 formschlüssig in Drehrichtung des Stellrades 21 in seine Seitenfläche 26 eingreift. Aus diesem Grund ist die Rillung in radialer Richtung bezogen auf die Drehachse des Stellrades 21 ausgeführt. Die Arretierbacke 25 ist über einen Bügel 27 an ein Betätigungselement 28 angeschlossen. Der Bügel 27 ist oberseitig um das Stellrad 21 herumgeführt. Das Betätigungselement 28 ragt aus dem Gehäuse 22 der Stelleinrichtung 20 heraus (vgl. Figur 1). Auf den Bügel 27 wirkt eine Druckfeder 29, die sich an der Innenseite des Gehäuses 22 der Stelleinrichtung 20 abstützt und durch die die Arretierbacke 25 an die Seitenfläche 26 des Stellrades 21 zum Arretieren desselben gedrückt wird. Zum Betätigen des Stellrades 21 ist es daher notwendig, das Betätigungselement 28 einzudrücken, um die miteinander in Eingriff stehenden Zahnung zwischen Arretierbacke 25 und der komplementäre Rillung der Seitenfläche 26 des Stellrades 21 zu lösen (vgl. Figur 4b). Eine Höhenverstellung der Stelleinrichtung kann sodann gegenüber dem Stativ durch Drehen des Stellrades 21 oder durch Verschieben derselben entlang des Stativs erfolgen. Wird das Betätigungselement 28 losgelassen, erfolgt selbsttätig eine Verriegelung des Stellrades 21, wodurch die Stelleinrichtung 20 gegenüber dem Stativ 3 arretiert ist (vgl. Figur 4a).

Die Filtereinheit 4 umfasst einen Rohwasserbehälter 30, der oberseitig durch einen Klappdeckel 31 verschlossen ist. In den Boden des Rohwasserbehälters 30 ist eine sich nach unten erstreckende Aufnahme zur Aufnahme eines Filtereinsatzes eingebracht. Unterhalb des Filtereinsatzes befindet sich ein Auslauf, so dass das in dem Rohwasserbehälter 30 befindlich ungefilterte Wasser nach Durchströmen des Filtereinsatzes auslaufen kann. Der Auslauf verfügt über ein selbstschließendes Ventil. Geöffnet wird das Auslaufventil gegen die Kraft eines Federelementes mittels einer Ventilbetätigungsklappe 32. In der in Figur 1 gezeigten Stellung der Ventilbetätigungsklappe 32 ist das Auslaufventil geschlossen. Betätigt wird die Ventilbetätigungsklappe 32 mit der Schnaupe eines das gefilterte Wasser aufnehmenden Gefäßes.

Die Filtereinheit 4 ist um die Längsachse des Stativs 3 gegenüber diesem und auch der Stelleinrichtung 21 verschwenkbar. Der mögliche Schwenkbetrag der Filtereinheit 4 ist in Figur 1 mit dem Bezugszeichen D kenntlich gemacht.

Zum Einrichten des Wasserfiltergerätes 1 an ein auf die Stellfläche 5 aufzusetzendes Gefäß dienen neben den die jeweils aktuell benötigte Stellfläche einfassenden Backen 6, 6', 6" und der Stelleinrichtung 20 zum Höheneinrichten der Filtereinheit 4 auch eine an der Außenseite des Gehäuses der Filtereinheit 4 angebrachte Markierung 33.

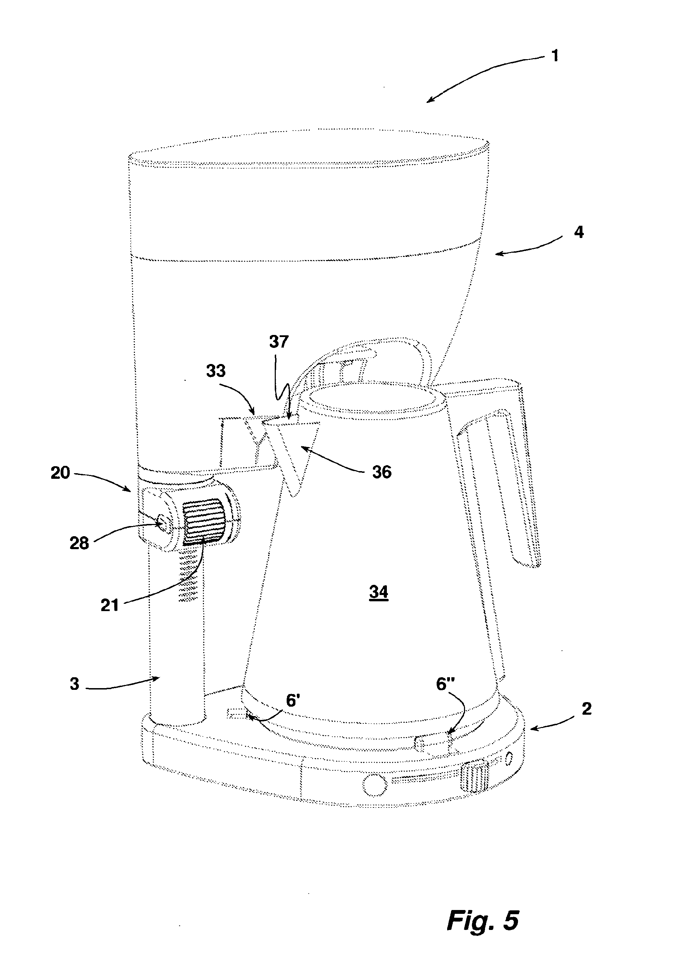

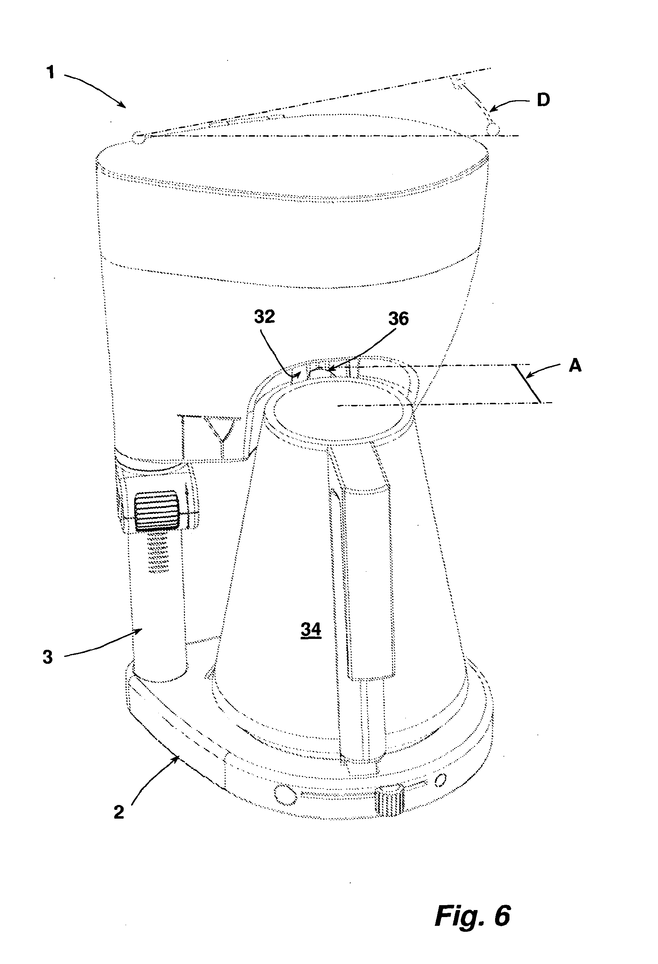

Figur 5 zeigt das Wasserfiltergerät 1 mit einem auf der Stellfläche 5 seines Standfußes 2 aufgesetzten elektrischen Wasserkocher 34. Der Wasserkocher 34 verfügt über eine Stromversorgungseinheit 35, auf die der Wasserkocher 34 lösbar aufgesetzt ist. Die Backen 6, 6', 6" sind mittels des Griffstückes 18 bezüglich des Durchmessers der Stromversorgungseinheit 35 eingerichtet worden, so dass diese und damit der Wasserkocher 34 zentrisch zur Stellfläche 5 angeordnet ist. Zum Einrichten der Höhe der Filtereinheit 4 wird der Wasserkocher 34 mit seiner Schnaupe an die Außenseite des Gehäuses der Filtereinheit 4 gelegt, wie dies in Figur 5 dargestellt ist. Anschließend wird die Filtereinheit 4 mit der Stelleinrichtung 20 hinsichtlich ihrer Höhe zu der Schnaupe 36 des Wasserkochers 34 eingerichtet. Diesem Zweck dient die Markierung 33. Die Filtereinheit 34 wird in eine Höhe gebracht, damit die das Schattenbild einer Schnaupe wiedergebende Markierung 33 sich in derselben Höhe wie der obere Abschluss der Schnaupe 36 des Wasserkochers 34 befindet. Befüllt wird der Wasserkocher 34 mit gefiltertem Wasser durch die obere Öffnung 37 seiner Schnaupe 36. Zu diesem Zweck wird der Wasserkocher 34 anschließend in die in Figur 6 gezeigte Stellung gebracht, in der die Schnaupe 36 mit ihrer Vorderseite auf die Ventilbetätigungsklappe 32 der Filtereinheit 4 wirkt und das Auslaufventil öffnet. Wie aus Figur 1 ersichtlich, weist die Ventilbetätigungsklappe 32 eine Konturierung auf, so dass die Schnaupe 36 darin eindeutig positioniert werden kann. Somit befindet sich der Wasserkocher 34 in seiner in Figur 6 gezeigten Stellung mit seiner auf die Ventilbetätigungsklappe 32 wirkenden Schnaupe 36 in einer Stellung, in der das aus dem Auslauf auslaufende gefilterte Wasser in die Öffnung 37 der Schnaupe 36 einläuft.

Zur Kompensation eines unterschiedlichen Abstandes A des vorderen, auf die Ventilbetätigungsklappe 32 wirkenden Endes der Schnaupe bei Wasserkochern oder anderen Gefäßen mit unterschiedlichem Durchmesser ist die Filtereinheit 4, wie bereits zu Figur 1 angedeutet, um das Stativ 3 um einen bestimmten Drehwinkelbetrag D verschwenkbar. Bei dem dargestellten Ausführungsbeispiel erfolgt die durch den Pfeil in Figur 6 gezeigte Schwenkbewegung der Filtereinheit 4 gegen die Kraft eines Federelementes, durch welches der Filtereinheit 4 bestrebt ist, in die entgegen der durch den Pfeil gekennzeichneten Richtung bewegt zu werden. Diese Federvorspannung wirkt bei dem auf den Standfuß 2 aufgesetzten Wasserkocher 34 gegen seine Schnaupe 36, was ein Öffnen der Ventilbetätigungsklappe 32 unterstützt. Gleichzeitig erfolgt hierdurch eine selbsttätige Anpassung an bezügliche ihres Abstandes A unterschiedlich dimensionierte Wasserkocher oder andere Geräte, in denen gefiltertes Wasser eingefüllt werden soll.

### Bezugszeichenliste

- 1: Wasserfiltergerät
- 2: Standfuß
- 3: Stativ
- 4: Filtereinheit
- 5: Stellfläche
- 6, 6', 6": Backe
- 7: Zentrum
- 8: Einfasskörper
- 9: Führungskörper
- 10: Kulisse
- 11: Platte
- 12: Gehäuse
- 13: Verschlussplatte
- 14: Führungszapfen
- 15: Kulisse
- 16: Steuerscheibe
- 17: Betätigungshebel
- 18: Griffstück
- 19: Schlitz
- 20: Stelleinrichtung
- 21: Stellrad
- 22: Gehäuse
- 23: Zahnung
- 24: Zahnung
- 25: Arretierbacke
- 26: Seitenfläche
- 27: Bügel
- 28: Betätigungselement
- 29: Druckfeder
- 30: Rohwasserbehälter
- 31: Klappdeckel
- 32: Ventilbetätigungsklappe
- 33: Markierung
- 34: Wasserkocher
- 35: Stromversorgungseinheit
- 36: Schnaupe
- 37: Öffnung
- A: Abstand
- D: Drehwinkelbetrag

## Patentansprüche

1. Wasserfiltergerät, umfassend einen Rohwasserbehälter (30) zur Aufnahme von zu filterndem Wasser, einen Auslauf, einen Filtereinsatz, angeordnet damit das zu filternde Wasser auf seinem Weg zum Auslauf den Filtereinsatz durchströmt, und eine Stellfläche (5) zum Anordnen eines das gefilterte Wasser aufnehmenden Gefäßes (34), **dadurch gekennzeichnet, dass**
- der Rohwasserbehälter (30) auf einem Niveau oberhalb des wasseraufnehmenden Gefäßes (34) angeordnet ist,
- die Stellfläche (5) die Oberseite eines Standfußes (2) ist,
- der Rohwasserbehälter (30) von einem am Standfuß (2) befestigten Stativ (3) an dieses höhenverstellbar angeschlossen ist und
- der Stellfläche (5) mehrere von dieser nach oben abragende, zum Einfassen eines Bodenteils (35) des Gefäßes (34) angeordnete Fixierelemente (6, 6', 6") zugeordnet sind, von denen zur Adaption an den Durchmesser des Bodenteils (35) eines Gefäßes (34) zumindest eines bezüglich seines Abstandes zu dem oder den anderen Fixierelementen (6, 6', 6") einrichtbar ist.

2. Wasserfiltergerät nach Anspruch 1, **dadurch gekennzeichnet, dass** zumindest ein Fixierelement feststehend ist, gegenüber dem oder den das oder die einrichtbaren Fixierelemente bezüglich ihres Abstandes zu dem zumindest einen feststehenden Fixierelement einrichtbar sind.

3. Wasserfiltergerät nach Anspruch 2, **dadurch gekennzeichnet, dass** das zumindest eine feststehende Fixierelement als Stellmarkierung zum orientierten Anordnen des Gefäßes mit seiner Schnaupe auf der Stellfläche dient.

4. Wasserfiltergerät nach Anspruch 1, **dadurch gekennzeichnet, dass** mehrere, gegenüber dem Zentrum (7) der Stellfläche (5) einrichtbare Fixierelemente (6, 6', 6") vorgesehen sind.

5. Wasserfiltergerät nach Anspruch 4, **dadurch gekennzeichnet, dass** die Fixierelemente (6, 6', 6") über eine Kulissenführung um eine im Zentrum (7) der Stellfläche (5) befindliche Achse drehbare und mit einem Betätigungshebel (17) ausgestattete Steuerscheibe (16) angeschlossen sind und zwar dergestalt, dass infolge einer Drehbewegung der Steuerscheibe (16) die Fixierelemente (6, 6', 6") in Richtung auf das Zentrum (7) der Stellfläche (5) zu oder bei umgekehrter Drehrichtung der Steuerscheibe (16) von diesem weg bewegt werden.

6. Wasserfiltergerät nach Anspruch 5, **dadurch gekennzeichnet, dass** der Betätigungshebel (17) in radialer Richtung nach außen abragend zur Steuerscheibe (16) angeordnet ist.

7. Wasserfiltergerät nach einem der Ansprüche 1 bis 6, **dadurch gekennzeichnet, dass** dem Rohwasserbehälter (30) ein auf das Stativ wirkendes Stellrad (21) zur Höhenverstellung des Rohwasserbehälters (30) gegenüber der Stellfläche (5) zugeordnet ist.

8. Wasserfiltergerät nach Anspruch 7, **dadurch gekennzeichnet, dass** das Stellrad (21) eine Zahnung (23) und das Stativ (3) entlang dem zur Höheneinrichtung des Rohwasserbehälters (30) vorgesehenen Abschnitt eine komplementäre Zahnung (24) aufweisen.

9. Wasserfiltergerät nach Anspruch 7 oder 8, **dadurch gekennzeichnet, dass** dem Stellrad (21) eine Arretiereinrichtung (25, 27, 28, 29) zum Arretieren des Stellrades (21) zugeordnet ist.

10. Wasserfiltergerät nach Anspruch 9, **dadurch gekennzeichnet, dass** die Arretiereinrichtung eine unter Federvorspannung auf das Stellrad (21) wirkende Backe (25) ist oder eine solche umfasst.

11. Wasserfiltergerät nach einem der Ansprüche 1 bis 10, **dadurch gekennzeichnet, dass** der Rohwasserbehälter (30) um das diesen tragende Stativ (3) um einen bestimmten Drehwinkelbetrag (D) anschlagbegrenzt schwenkbar ist.

12. Wasserfiltergerät nach Anspruch 11, **dadurch gekennzeichnet, dass** der Rohwasserbehälter (30) gegen die Kraft einer Rückstellfeder schwenkbar ist, welche Rückstellfeder bestrebt ist, den Rohwasserbehälter (30) mit seinem Auslauf in Richtung zu dem dem Zentrum (7) der Stellfläche (5) näheren Ende seines Verschwenkweges zu bewegen.

13. Wasserfiltergerät nach einem der Ansprüche 1 bis 12, **dadurch gekennzeichnet, dass** der Boden des Rohwasserbehälters (30) eine Aufnahme zur Aufnahme des Filtereinsatzes aufweist und der untere Abschluss der Aufnahme den Auslauf trägt oder diesen bildet.

14. Wasserfiltergerät nach Anspruch 13, **dadurch gekennzeichnet, dass** der Auslauf ein Ventil zum Öffnen und Schließen des Auslaufes, insbesondere ein gegen die Kraft einer Rückstellfeder öffnendes Ventil umfasst.

15. Wasserfiltergerät nach einem der Ansprüche 1 bis 14, **dadurch gekennzeichnet, dass** der Auslauf angeordnet ist, damit ein auf der Stellfläche (5) befindliches Gefäß (34) über seine Schnaupe (36) mit aus dem Auslauf ausfließendem gefilterten Wasser befüllt werden kann.

## Claims

1. Water filter device, comprising a non-filtered water container (30) for accommodating water to be filtered, an outlet, a filter insert, positioned so that the water to be filtered flows through the filter insert on its path to the outlet, and a standing surface (5) for positioning a vessel (34) that receives the filtered water, **characterized in that**
- the non-filtered water container (30) is positioned at a level above the vessel (34) receiving the water,
- the standing surface (5) is the top side of a base (2),
- the non-filtered water container (30) is connected to a stand (3) so as to be vertically adjustable, said stand being secured to the base (2),
- a plurality of securing elements (6, 6', 6"), arranged protruding upwards from the standing surface (5) for enclosing a bottom part (35) of the vessel (34), are associated with said standing surface, at least one of said securing elements being adjustable with respect to its spacing from the securing element or from the other securing elements (6, 6', 6") for adapting to the diameter of the bottom part (25) of a vessel (34).

2. Water filter device according to Claim 1, **characterized in that** at least one securing element is fixed, relative to which securing element or elements the adjustable securing element or elements is or are adjustable with respect to their spacing from the at least one fixed securing element.

3. Water filter device according to Claim 2, **characterized in that** the at least one fixed securing element serves as a positioning mark for positioning the vessel with its spout in an oriented manner on the standing surface.

4. Water filter device according to Claim 1, **characterized in that** a plurality of securing elements (6, 6', 6") that are adjustable relative to the centre (7) of the standing surface (5) are provided.

5. Water filter device according to Claim 4, **characterized in that** the securing elements (6, 6'. 6") are connected via a connecting link guide to a control cam (16) that is rotatable about an axis located in the centre (7) of the standing surface (5) and is provided with an actuating lever (17) in such a manner that on account of a rotational movement of the control cam (16), the securing elements (6, 6', 6") are moved in the direction of the centre (7) of the standing surface (5) or in the case of the reversed rotational movement of the control cam (16) are moved away from the centre of the standing surface.

6. Water filter device according to Claim 5, **characterized in that** the actuating lever (17) is positioned protruding outwards in the radial direction relative to the control cam (16).

7. Water filter device according to one of Claims 1 to 6, **characterized in that** an adjusting wheel (21) that acts on the stand for the vertical adjustment of the non-filtered water container (30) relative to the standing surface (5) is associated with the non-filtered water container (30).

8. Water filter device according to Claim 7, **characterized in that** the adjusting wheel (21) has a toothing (23) and the stand (3) has a complementary toothing (24) along the section provided for the vertical adjustment of the non-filtered water container (30).

9. Water filter device according to Claim 7 or 8, **characterized in that** a locking device (25, 27, 28, 29) for locking the adjusting wheel (21) is associated with the adjusting wheel (21).

10. Water filter device according to Claim 9, **characterized in that** the locking device is a jaw (25) that acts on the adjusting wheel (21) under initial spring tension or includes such a part.

11. Water filter device according to one of Claims 1 to 10, **characterized in that** the non-filtered water container (30) is pivotable in a manner limited by a stop member about the stand (3) supporting said non-filtered water container by a certain angle of rotation (D).

12. Water filter device according to Claim 11, **characterized in that** the non-filtered water container (30) is pivotable in opposition to the force of a return spring, which return spring attempts to move the non-filtered water container (30) with its outlet in the direction of the end of its pivotal path nearer to the centre (7) of the standing surface (5).

13. Water filter device according to one of Claims 1 to 12, **characterized in that** the bottom of the non-filtered water container (30) has an accommodating means for accommodating the filter insert and the lower closure of the accommodating means supports the outlet or forms the same.

14. Water filter device according to Claim 13, **characterized in that** the outlet includes a valve for opening and closing the outlet, in particular a valve that opens in opposition to the force of a return spring.

15. Water filter device according to one of Claims 1 to 14, **characterized in that** the outlet is positioned so that a vessel (34) that is located on the standing surface (5) can be filled via its spout (36) with filtered water flowing out of the outlet.

## Revendications

1. Dispositif de filtration d'eau comprenant un réservoir d'eau brute (30) destiné à recevoir de l'eau à filtrer, un écoulement, un élément filtrant, disposés de sorte que l'eau à filtrer traverse l'élément filtrant lorsqu'elle se dirige vers l'écoulement ainsi qu'une surface de dépose (5) destinée à y placer un récipient (34) collectant l'eau filtrée **caractérisé en ce que**
- le réservoir d'eau brute (30) est disposé à un niveau au-dessus du récipient (34) collectant l'eau,
- la surface de dépose (5) est la partie supérieure d'un pied (2),
- le réservoir d'eau brute (30) est raccordé de manière réglable en hauteur à une colonne (3) fixée au pied (1) et
- la surface de dépose (5) comprend plusieurs éléments de fixation (6, 6', 6") en saillie vers le haut, destinés à sertir le fond (35) du récipient (34), dont l'un au moins est réglable dans sa distance par rapport à un autre ou aux autres éléments de fixation (6, 6', 6") afin d'obtenir une adaptation au diamètre du fond (35) d'un récipient (34).

2. Dispositif de filtration d'eau selon la revendication 1 **caractérisé en ce qu'**au moins un élément de fixation est fixe, l'élément ou les éléments de fixation réglables étant réglables dans sa ou leur distance par rapport à l'au moins un élément de fixation fixe.

3. Dispositif de filtration d'eau selon la revendication 2 **caractérisé en ce que** l'au moins un élément de fixation fixe sert de marqueur de position afin d'orienter le récipient avec son bec verseur sur la surface de dépose.

4. Dispositif de filtration d'eau selon la revendication 1 **caractérisé en ce que** plusieurs éléments de fixation (6, 6', 6") réglables par rapport au centre (7) de la surface de dépose (5) sont prévus.

5. Dispositif de filtration d'eau selon la revendication 4 **caractérisé en ce que** les éléments de fixation (6, 6', 6") sont raccordés par un guidage à coulisse autour d'un axe se trouvant au centre (7) de la surface de dépose (5) à un disque de commande (16) rotatif et muni d'un levier d'actionnement (17) et ce, de telle sorte qu'à la suite d'un mouvement de rotation du disque de commande (16) les éléments de fixation (6, 6', 6") soient mis en mouvement en direction du centre (7) de la surface de dépose (5) ou en s'éloignant de cette orientation lors d'une rotation en sens inverse du disque de commande (16).

6. Dispositif de filtration d'eau selon la revendication 5 **caractérisé en ce que** le levier d'actionnement (17) est disposé dans le sens radial, en saillie vers l'extérieur, par rapport au disque de commande (16).

7. Dispositif de filtration d'eau selon l'une des revendications 1 à 6 **caractérisé en ce que** le réservoir d'eau brute (30) est muni d'une molette de réglage (21) agissant sur la colonne afin de régler en hauteur le réservoir d'eau brute (30) par rapport à la surface de dépose (5).

8. Dispositif de filtration d'eau selon la revendication 7 **caractérisé en ce que** la molette de réglage (21) présente une denture (23) et la colonne (3) présente une denture (24) complémentaire le long du tronçon prévu pour régler le réservoir d'eau brute (30) en hauteur.

9. Dispositif de filtration d'eau selon la revendication 7 ou 8 **caractérisé en ce que** la molette de réglage (21) est munie d'un dispositif d'arrêt (25, 27, 28, 29) afin d'immobiliser la molette de réglage (21).

10. Dispositif de filtration d'eau selon la revendication 9 **caractérisé en ce que** le dispositif d'arrêt est constitué d'une mâchoire (25) agissant sous l'effet de précontrainte d'un ressort sur la molette (21) ou qu'il en comprend une.

11. Dispositif de filtration d'eau selon l'une des revendications 1 à 10 **caractérisé en ce que** le réservoir d'eau brute (30) pivote jusqu'à une butée selon un certain angle de rotation (D) autour de la colonne (3) le supportant.

12. Dispositif de filtration d'eau selon la revendication 11 **caractérisé en ce que** le réservoir d'eau brute (30) peut être pivoté contre la force exercée par un ressort de rappel, lequel ressort de rappel s'efforce de mettre en mouvement le réservoir d'eau brute (30) avec son écoulement dans le sens de la fin de sa course de pivotement qui est la plus proche du centre (7) de la surface de dépose (5).

13. Dispositif de filtration d'eau selon l'une des revendications 1 à 12 **caractérisé en ce que** le fond du réservoir d'eau brute (30) présente un logement destiné à recevoir l'élément filtrant et que l'extrémité inférieure du logement supporte ou forme l'écoulement.

14. Dispositif de filtration d'eau selon la revendication 13 **caractérisé en ce que** l'écoulement comprend un clapet pour ouvrir et fermer l'écoulement, notamment un clapet s'ouvrant en exerçant une force contre un ressort de rappel.

15. Dispositif de filtration d'eau selon l'une des revendications 1 à 14 **caractérisé en ce que** l'écoulement est disposé de manière à ce qu'un récipient (34) qui se trouve sur la surface de dépose (5) peut être rempli par son bec verseur (36) avec de l'eau filtrée s'écoulant de l'écoulement.
